# EUROPEAN PATENT APPLICATION

(11) **EP 4 567 709 A1**
(43) Date of publication of application: **11.06.2025**
(21) Application number: 24217431.6
(22) Date of filing: 04.12.2024
(51) Int. Cl.: G06Q 40/02, G06Q 20/10, G06Q 20/40, G07F 19/00, G06Q 20/04

(54) **FINANCIAL TRANSACTION SYSTEM, MONEY HANDLING APPARATUS, AND FINANCIAL TRANSACTION METHOD**

(30) Priority: 08.12.2023 JP 2023207540
(71) Applicant: GLORY LTD., Himeji-shi Hyogo 670-8567 (JP)
(72) Inventor: AKASE, Masatomo, 670-8567 Hyogo (JP)
(74) Representative: SSM Sandmair

(57) **Abstract**

A financial transaction system includes: a money handling apparatus (1) configured to be operated by a customer; a remote conversation system (10) enabling a remote conversation between the customer and a consultant attending to the customer; an output unit (12A) included in the remote conversation system (10) and configured to output transaction information indicative of content of a money transaction determined in the remote conversation; an obtaining unit (1A) configured to obtain the transaction information; and a transaction processor (1D) configured to execute transaction processing based on the transaction information.

## Description

### BACKGROUND OF THE INVENTION

### Field of the Invention

The present disclosure relates to a financial transaction system, a money handling apparatus, and a financial transaction method.

### Description of the Related Art

In a branch of a financial institution such as a bank, money handling apparatuses for managing money and the like in the branch as described in JP 2019-16047A are conventionally used. The money handling apparatuses are commonly operated by tellers in the branch, for example. In recent years, saving of human resources in branches of banks is promoted due to factors such as the labor shortage, work style reform, and low profit structure. Also, under the circumstances in which the scramble for human resources between companies (banks) is becoming more intense, it is difficult to secure consultants who have a high degree of financial literacy. Therefore, such a consultant is assigned to a desired location and the work efficiency is increased by holding a remote conversation between a customer visiting a terminal branch and the consultant, for example. Moreover, although money handling apparatuses have been conventionally operated by tellers in a branch, for example, the number of clerks working in a branch has decreased, and attempts to let customers directly operate the money handling apparatuses are started. A situation is conceivable in which a customer and a consultant who is in a remote place hold a remote consultation about financial investment, inheritance, financing, a loan, or the like, for example, and the customer operates a money handling apparatus based on the content determined in the remote consultation. However, the customer may not be accustomed to operating the money handling apparatus. In such a case, a clerk such as a teller in the branch is called to support the customer who has trouble operating the money handling apparatus. At this time, if the content of the consultation held between the customer and the remote consultant is complex, the clerk in the branch needs to confirm the content by making a phone call to the remote consultant, for example, and there is a risk that the work efficiency of the clerk or the consultant may decrease, or the clerk or the consultant may make a mistake in their work, for example. An object of the present disclosure is to provide means for enabling a customer to smoothly carry out a transaction with use of a money handling apparatus based on content determined in a conversation held between the customer and a consultant who is in a remote place.

### SUMMARY OF THE INVENTION

As a means for solving the above-described issue, a financial transaction system according to the present disclosure includes:
a money handling apparatus (1) configured to be operated by a customer;
a remote conversation system (10) enabling a remote conversation between the customer and a consultant attending to the customer;
an output unit (12A) included in the remote conversation system (10) and configured to output transaction information indicative of content of a money transaction determined in the remote conversation;
an obtaining unit (1A) included in the money handling apparatus (1) and configured to obtain the transaction information; and
a transaction processor (1D) included in the money handling apparatus (1) and configured to execute transaction processing based on the transaction information.

In one preferred embodiment of the present disclosure,
the output unit (12A) is configured to output graphics indicative of the content of the money transaction as the transaction information; and
the obtaining unit (1A) is configured to obtain the transaction information by reading the graphics.

In one preferred embodiment of the present disclosure,
the output unit (12A) is configured to transmit the transaction information to a portable terminal held by the customer; and
the obtaining unit (1A) is configured to obtain the transaction information from the portable terminal.

In one preferred embodiment of the present disclosure, the financial transaction system further including
a customer terminal (11, 15) included in the remote conversation system (10), the customer terminal (11, 15) being capable of communicating with the money handling apparatus (1) and enabling the customer to have the remote conversation with the consultant,
wherein the obtaining unit (1A) is configured to obtain the transaction information output by the output unit (12A) from the customer terminal (11, 15).

In one preferred embodiment of the present disclosure, the financial transaction system further including
a consultant terminal (12) included in the remote conversation system (10) and enabling the consultant to have the remote conversation with the customer,
wherein the output unit (12A) is provided in at least one of the customer terminal (11, 15) and the consultant terminal (12).

In one preferred embodiment of the present disclosure, the financial transaction system further including
a remote controller (12B, 15C) included in the remote conversation system (10), the remote controller being capable of communicating with the money handling apparatus (1) and enabling the consultant to remotely operate the money handling apparatus (1).

In one preferred embodiment of the present disclosure,
the output unit (12A) is configured to output first customer information for identifying the customer who has had the remote conversation together with the transaction information,
the financial transaction system further including:
   a person identification unit (1B, 15A) configured to obtain second customer information for identifying a person who is operating the money handling apparatus (1); and
   a comparing unit (13B, 15B) configured to compare the first customer information and the second customer information,
   wherein the transaction processor (1D) is configured to execute the transaction processing in response to the comparing unit (13B, 15B) determining that the first customer information and the second customer information match, and configured so as not to execute the transaction processing in response to the comparing unit (13B, 15B) determining that the first customer information and the second customer information do not match.

As a means for solving the above-described issue, a financial transaction method according to a second aspect of the present disclosure is performed by a money handling apparatus (1) that is operated by a customer and a remote conversation system (10), the financial transaction method including:
a remote conversation step of holding a remote conversation between the customer and a consultant attending to the customer via the remote conversation system (10);
an output step of outputting transaction information indicative of content of a money transaction determined in the remote conversation with use of the remote conversation system (10);
an obtaining step of obtaining the transaction information by the money handling apparatus (1); and
a transaction processing step of executing transaction processing by the money handling apparatus (1) based on the transaction information.

The following detailed description of embodiments referring to the drawings will further clarify the above-described embodiments, other embodiments, procedures, features, functions, and effects relating to the present disclosure.

### BRIEF DESCRIPTION OF THE DRAWINGS

Embodiments of the present disclosure are described based on the following drawings.
FIG. 1 is a schematic diagram showing a first example of a branch of a financial institution.
FIG. 2 is a block diagram showing a first example of a configuration of a financial transaction system.
FIG. 3 is a diagram showing a flow of actions of a customer and a consultant in the first example of the branch of the financial institution.
FIG. 4 is a flowchart showing a flow of processing performed in the financial transaction system in the first example.
FIG. 5 is a schematic diagram showing a second example of a branch of a financial institution.
FIG. 6 is a block diagram showing a second example of the configuration of the financial transaction system.
FIG. 7 is a diagram showing a flow of actions of a customer and a consultant in the second example of the branch of the financial institution.
FIG. 8 is a flowchart showing a flow of processing performed in the financial transaction system in the second example.

### DETAILED DESCRIPTION OF THE PREFERRED EMBODIMENTS

The following describes a financial transaction system according to the present disclosure based on the drawings. Note that the present disclosure is not limited to the following embodiments, and various modifications can be made within a scope not departing from the gist of the present disclosure.

### Outline of Branch of Financial Institution

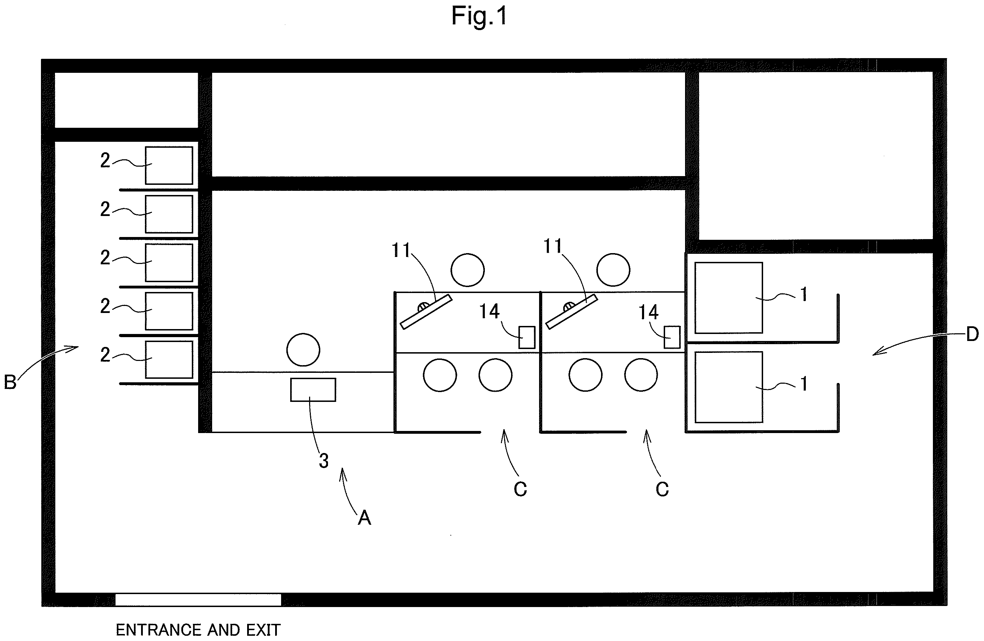

The following describes a financial transaction system according to the present disclosure. FIG. 1 shows an example of a branch of a financial institution such as a branch or local office of a bank, for example. A bank shown in FIG. 1 includes a counter A for providing services to customers, automated transaction booths B, consultation booths C, and self-depositing and withdrawing booths D.

A teller (clerk) who is in charge of account-related transaction processing is always present at the counter A. An account-related counter terminal 3 is disposed at the counter A.

The account-related counter terminal 3 is a terminal for managing accounts of customers and is operated by the teller. The account-related counter terminal 3 is connected to an account-related server (not shown) via an intra-bank network such as a WAN (Wide Area Network) in a manner such that data communication can be performed. The account-related server is provided in a head office, a data center, or the like that is in a remote place, for example, and comprehensively manages information regarding account processing.

A plurality of automated teller machines 2 (ATMs) are disposed in the automated transaction booths B. The automated teller machines 2 are used by individual customers to deposit cash into savings accounts or withdraw cash from the savings accounts. The automated teller machines 2 are connected to the account-related server via the intra-bank network in a manner such that data communication can be performed. When cash is deposited or withdrawn with the automated teller machine 2, account updating processing is also automatically performed. An automated money change machine or an automated tax/public money paying machine may also be provided in addition to the automated teller machines 2.

The consultation booths C are spaces for conducting consultation about financial investment, inheritance, financing, and loans of customers, for example. A customer consultation terminal 11 included in a remote conversation system 10, a printing device 14 (printer) included in the remote conversation system 10, and the like are disposed in each consultation booth C. The printing device 14 is disposed next to the customer consultation terminal 11. The customer consultation terminal 11 is an example of a "customer terminal".

A money handling apparatus 1 is disposed in each self-depositing and withdrawing booth D. The money handling apparatus 1 can carry out, for example, large cash transactions (depositing, withdrawal, money change, etc.) that cannot be carried out by the automated teller machines 2 (ATMs) in addition to transactions that can be carried out by the automated teller machines 2 (ATMs).

The money handling apparatus 1 recognizes and counts banknotes and coins, and stores the banknotes and coins therein by sorting them. Also, the money handling apparatus 1 stores bound notes including a predetermined number of (e. g., 100) notes for each type of banknotes and also stores wrapped coins including a predetermined number of (e. g., 50) coins for each type of coins. The wrapped coins are coins of the same type wrapped with a wrapping medium such as paper or a film, and are generally called a coin-roll. Accordingly, the money handling apparatus 1 is capable of performing depositing or withdrawing processing or money change processing in which a large amount of banknotes or coins are handled.

### First Example of Configuration of Financial Transaction System

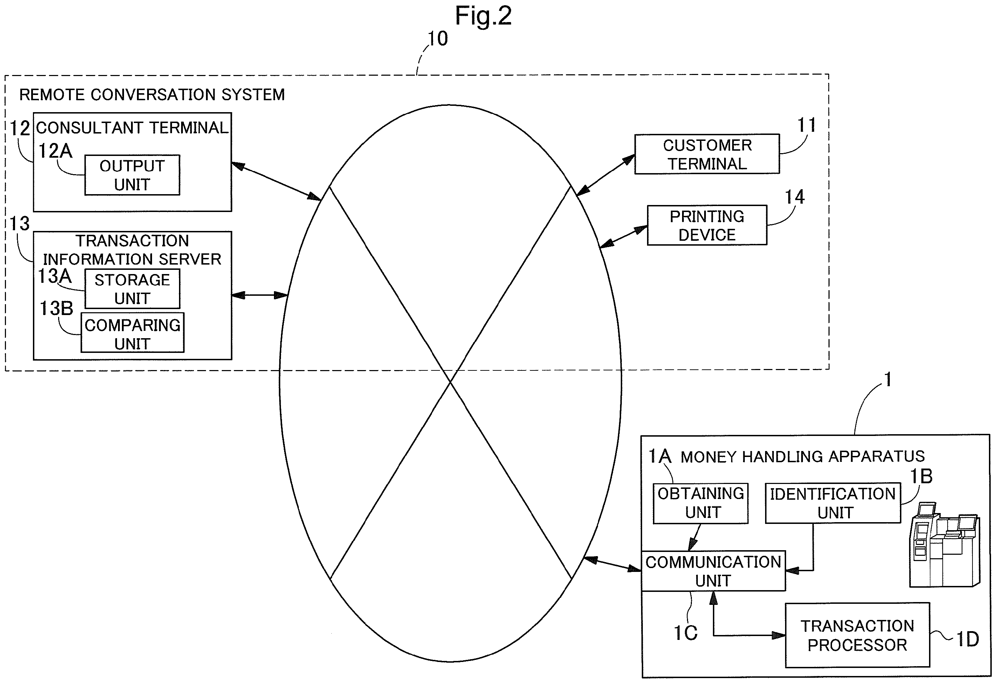

The following describes a first example of a configuration of a financial transaction system based on FIGS. 1 to 4. As shown in FIG. 2, the remote conversation system 10 in the first example includes the customer consultation terminal 11, a consultant terminal 12, a transaction information server 13, and the printing device 14. The customer consultation terminal 11 and the printing device 14 are disposed in the consultation booth C. The consultant terminal 12 is disposed in the head office, a local core office, or a consultation center of the bank, for example. The transaction information server 13 is disposed in the head office or a data center of the bank, for example. The customer consultation terminal 11, the consultant terminal 12, the transaction information server 13, and the printing device 14 are connected to each other via the intra-bank network, for example, in a manner such that data communication can be performed.

Note that the remote conversation system 10 includes a plurality of customer consultation terminals 11 and a plurality of printing devices 14 as shown in FIG. 1. Accordingly, the remote conversation system 10 according to the present disclosure may also include a plurality of consultant terminals 12. Also, a plurality of servers may also be provided as backup to the transaction information server 13.

The customer consultation terminal 11 includes a camera, a monitor (including a monitor having a touch panel function), a microphone, a speaker, a processor, a data communication module, etc. A consultant who is in a remote place is displayed on the monitor of the customer consultation terminal 11. The customer consultation terminal 11 is used by a customer to have a remote conversation with the consultant.

The consultant terminal 12 includes a camera, a monitor (including a monitor having a touch panel function), a microphone, a speaker, a keyboard, a processor, a data communication module, etc. A customer who is in the branch is displayed on the monitor of the consultant terminal 12. The consultant terminal 12 is used by a consultant to have a remote conversation with the customer.

The use of the remote conversation system 10 enables a customer and a consultant who is in a main office to have a conversation about advanced consultation content such as financial investment, inheritance, financing, or a loan, and display the same document or screen on the monitors of their terminals, for example. Accordingly, it is sufficient for the bank or the like to assign consultants who have a high degree of financial literacy only to desired locations. Thus, it is possible to reduce efforts required to secure the personnel in terminal branches, and suppress variations in customer service quality between the branches.

Note that each of the customer consultation terminal 11 and the consultant terminal 12 may be a desktop terminal or a tablet terminal. Also, the customer consultation terminal 11 may include a plurality of monitors including a monitor for displaying the consultant and a monitor for displaying documents on the screen. A configuration is also possible in which remote control can be performed on the customer consultation terminal 11 with use of the consultant terminal 12.

A record of the conversation between the customer and the consultant and information indicative of content determined based on the conversation are stored in the transaction information server 13. The transaction information server 13 includes a storage unit 13A and a comparing unit 13B which will be described later. The comparing unit 13B may include a processor and a data communication module. The consultant terminal 12 includes an output unit 12A.

The storage unit 13A is a storage medium including at least one of a volatile memory, a non-volatile memory, a hard disk drive, and the like. The output unit 12A is at least one of an input interface (including a keyboard and a touch panel button) on an operation screen of the consultant terminal 12, a communication module, and the like. When the consultant inputs consultation content to the consultant terminal 12 and saves the consultation content, transaction information indicative of the consultation content is transferred from the output unit 12A to the storage unit 13A and saved as a database in the storage unit 13A.

The printing device 14 is an ink-jet printer or a laser printer, for example, and prints the consultation content and the like on paper. The printing device 14 is disposed in the consultation booth C. Therefore, the customer can receive a confirmation sheet showing the consultation content and the like printed by the printing device 14.

In a conventional branch, the money handling apparatus 1 is disposed in a backroom or the like that customers cannot enter, and is operated by a clerk such as a teller. However, in recent years, saving of human resources in branches of banks is promoted due to factors such as the labor shortage, work style reform, and low profit structure. Therefore, attempts to let customers directly operate the money handling apparatus 1 by themselves are started by installing the money handling apparatus 1 in an area that customers can enter. Note that the money handling apparatus 1 may be operated by a clerk.

When a customer who is in the consultation booth C had a conversation with a consultant who is in a remote place and money handling (depositing, withdrawal, money change, bank transfer, etc.) needs to be performed based on the content determined through the conversation, a case is conceivable in which the customer operates the money handling apparatus 1 to carry out the money transaction. At this time, if the customer is not accustomed to operating the money handling apparatus 1, a clerk in the branch may rush to the customer to help the customer operate the money handling apparatus 1, for example.

However, under the influence of a recent reduction in the workforce and work style reform, for example, clerks and the like in the branch tend to be required to deal with various matters with a limited number of personnel within limited working hours, and tend to be always busy. Under such circumstances, if a clerk in the branch helps the customer, the clerk may be required to do additional work such as making a phone call to the consultant to confirm details of the consultation content, and this may pose an excessive load on the clerk in the branch and lead to the occurrence of a mistake in their work. Therefore, the present disclosure provides a configuration that keeps a customer who has consulted with a remote consultant in the consultation booth C from having trouble when operating the money handling apparatus 1. The following describes the configuration with reference to FIGS. 2 to 4.

As shown in FIG. 2, the money handling apparatus 1 includes an obtaining unit 1A, an identification unit 1B, a communication unit 1C, and a transaction processor 1D. The obtaining unit 1A is a bar code reader or a two-dimensional code reader, for example. The identification unit 1B is at least one of a sensor used for biometric identification such as face identification or fingerprint identification, a reading device used for identification based on what the person has, such as a bankbook, a cash card, a public identification card (e.g., a driver's license or a passport), and an input device used for identification based on what the person knows, such as a personal identification number or a telephone number. The identification unit 1B obtains second customer information for identifying the person who is operating the money handling apparatus 1. The identification unit 1B corresponds to a "person identification unit".

Note that a configuration is also possible in which an existing money handling apparatus 1 is retrofitted with the obtaining unit 1A and the identification unit 1B. In this case, firmware and software operating the existing money handling apparatus 1 are updated to support the functions of the obtaining unit 1A and the identification unit 1B. Accordingly, the bank or the like need not replace the existing money handling apparatus 1.

Although details will be described later, when the identification unit 1B has obtained the second customer information, the money handling apparatus 1 communicates with the transaction information server 13 via the communication unit 1C to make an inquiry for confirmation of the identity to the comparing unit 13B. The comparing unit 13B then compares customer information (first customer information) associated with transaction information with the person (second customer information) who is operating the money handling apparatus 1.

The transaction processor 1D executes money transaction processing (depositing, withdrawal, money change, bank transfer, etc.) based on the transaction information.

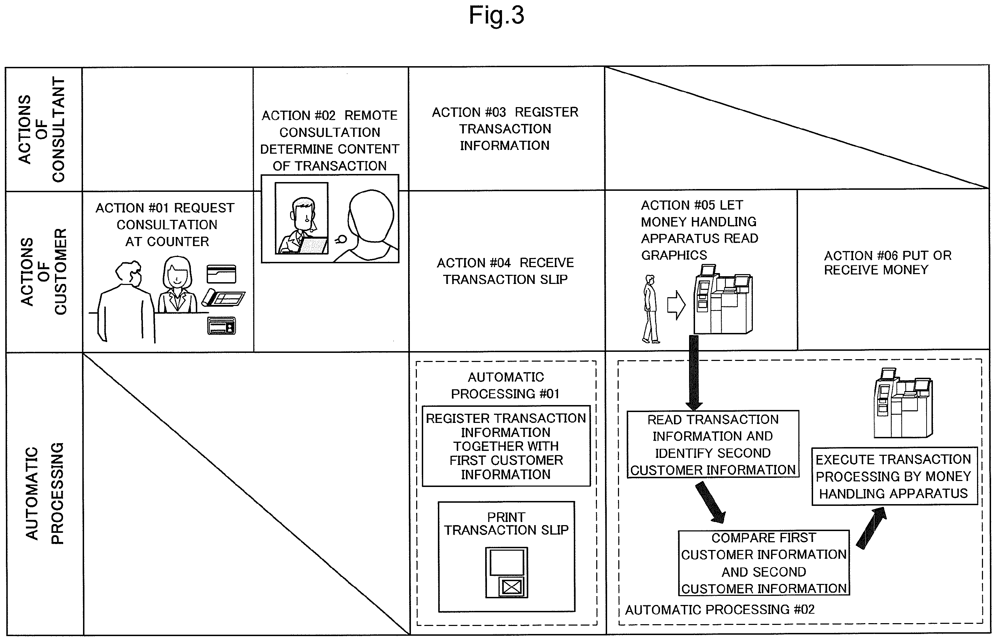

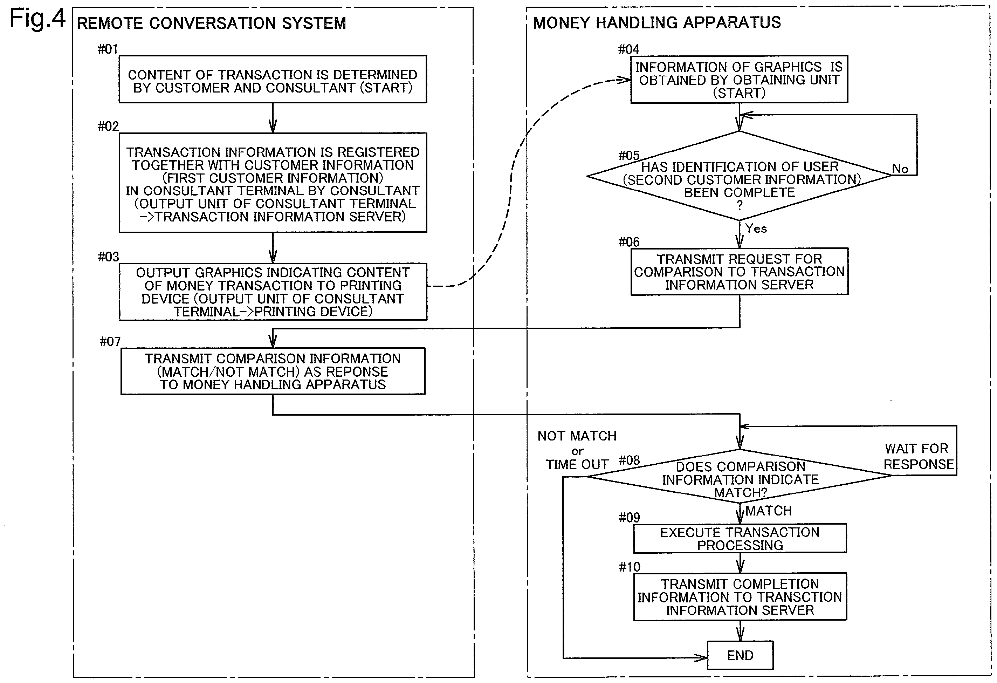

FIG. 3 shows actions of a customer and a consultant who is in a remote place, automatic processing performed by the remote conversation system 10, and automatic processing performed by the money handling apparatus 1 in time series. FIG. 4 is a flowchart showing processing that is performed when the money handling apparatus 1 needs to be operated based on a conversation held between the customer and the remote consultant.

As shown in "action #01" in FIG. 3, the customer first makes a request for a consultation to a clerk or the like at the counter A. Then, the customer is guided to the consultation booth C by a clerk or the like in the branch, to have a remote consultation with the consultant who is in a remote place (action #02 in FIG. 3). At this time, the customer and the consultant attending to the customer have a remote conversation (remote consultation) via the remote conversation system 10. When the content of a transaction is determined based on the remote conversation, the consultant registers transaction information together with customer information (first customer information) in a database (action #03 in FIG. 3). The customer information includes the name, account information, etc. Note that the request for the consultation may be accepted by an automatic reception device, rather than at the manned counter, and the automatic reception device may guide the customer to the consultation booth C.

When "action #03" is performed, "automatic processing #01" shown in FIG. 3 is started. The following describes "action #03" and "automatic processing #01" with reference to the flowchart shown in FIG. 4. When the content of the transaction is determined by the customer and the consultant (step #01 in FIG. 4), the consultant registers the transaction information (transaction information corresponding to the determined content of the transaction) together with the customer information (first customer information) in the database (step #02 in FIG. 4). Specifically, when the consultant inputs the transaction information to the consultant terminal 12 and saves the transaction information, the output unit 12A outputs the transaction information indicative of the content of the money transaction determined based on the remote conversation to the transaction information server 13 as shown in "automatic processing #01" in FIG. 3. The transaction information output to the transaction information server 13 is stored as a database in the storage unit 13A.

At the same time as the processing performed in "step #02" or when the transaction information has been registered in "step #02", the output unit 12A outputs graphics indicative of the content of the money transaction as the transaction information to the printing device 14 as shown in "automatic processing #01" in FIG. 3 (step #03 in FIG. 4). The printing device 14 prints a transaction slip showing the graphics in response to the output from the output unit 12A. The customer receives the transaction slip printed by the printing device 14 (action #04 in FIG. 3).

Examples of the graphics printed on the transaction slip include a two-dimensional code such as a QR code (registered trademark) or a data matrix, a bar code, and a color code. The transaction information recorded as the graphics includes a transaction type (depositing, withdrawal, money change, bank transfer, etc.), a transaction amount, information of a payee, and the like. Also, letters indicative of a portion of the transaction information and things to note (e. g., "Please let the money handling apparatus read the following code.") are printed on the transaction slip so that the customer can see the information and the note.

The customer who has received the transaction slip moves to a self-depositing and withdrawing booth D and let the money handling apparatus 1 read the graphics on the transaction slip (action #05 in FIG. 3). When the graphics are read by the money handling apparatus 1, "automatic processing #02" shown in FIG. 3 is started.

The following describes "automatic processing #02" shown in FIG. 3 with reference to "step #04" to "step #10" shown in FIG. 4. The obtaining unit 1A of the money handling apparatus 1 obtains information of the graphics on the transaction slip. That is to say, the obtaining unit 1A in the first example is configured to obtain the transaction information by reading the graphics on the transaction slip.

When the obtaining unit 1A has obtained the information of the graphics indicative of the content of the money transaction (step #04 in FIG. 4), a controller (processor) of the money handling apparatus 1 determines whether or not the identification unit 1B has obtained second customer information for identifying the person who is operating the money handling apparatus 1 (step #05 in FIG. 4). If the second customer information has not been obtained by the identification unit 1B (step #05 in FIG. 4: No), the determination processing in "step #05" is repeated until the second customer information is obtained by the identification unit 1B.

When the second customer information has been obtained by the identification unit 1B (step #05 in FIG. 4: Yes), the controller of the money handling apparatus 1 transmits the second customer information and the transaction information obtained from the graphics to the transaction information server 13 via the communication unit 1C shown in FIG. 2. At this time, the controller of the money handling apparatus 1 transmits a request for comparison between customer information (first customer information) associated with the transaction information and the person (second customer information) operating the money handling apparatus 1, to the transaction information server 13 (step #06 in FIG. 4).

The transaction information server 13 includes the comparing unit 13B shown in FIG. 2. The comparing unit 13B executes processing in "step #07" shown in FIG. 4. Specifically, in the processing in "step #07", the comparing unit 13B searches the database for data of the same transaction information as the transaction information received from the money handling apparatus 1, among pieces of transaction information that have not been processed, for example. If data of the same transaction information as the transaction information received from the money handling apparatus 1 is found in the database, the comparing unit 13B determines whether or not first customer information associated with the transaction information in the database matches the second customer information received from the money handling apparatus 1. If the first customer information matches the second customer information in "step #07", the comparing unit 13B transmits comparison information indicative of "match" as a response to the money handling apparatus 1. If the same transaction information as the transaction information received from the money handling apparatus 1 is not found in the database or the same transaction information is found in the database but the first customer information does not match the second customer information, the comparing unit 13B transmits comparison information indicative of "not match" as a response to the money handling apparatus 1.

After transmitting the request for comparison in the processing performed in "step #06", the money handling apparatus 1 determines whether or not the communication unit 1C has received comparison information from the transaction information server 13 (step #08 in FIG. 4). Note that whether the comparison information indicates "match" or "not match" is also determined in "step #08". If the comparison information has not been received, the determination processing in "step #08" is repeated for a response waiting period set in advance (step #08 in FIG. 4: wait for response). At this time, the money handling apparatus 1 is waiting for a response from the transaction information server 13.

When it is determined that the communication unit 1C has received comparison information indicative of "match" from the transaction information server 13 (step #08 in FIG. 4: match), the transaction processor 1D of the money handling apparatus 1 executes transaction processing (depositing processing, withdrawal processing, money change processing, bank transfer processing, etc.) based on the transaction information (step #09 in FIG. 4). At this time, the customer puts money to be deposited or changed into the money handling apparatus 1, receives withdrawn or changed money from the money handling apparatus 1, or make a final operation to confirm bank transfer, as necessary as shown in "action #06" in FIG. 3.

On the other hand, when the communication unit 1C has received comparison information indicative of "not match" form the transaction information server 13 or the period for waiting for a response from the transaction information server 13 has expired (step #08 in FIG. 4: not match, time out), withdrawal processing is not performed by the money handling apparatus 1. At this time, a display device (not shown) included in the money handling apparatus 1 displays a message indicative of a failure of the transaction or a message prompting the customer to retry operations from the start, for example. Also, the money handling apparatus 1 may perform processing for notifying a clerk.

That is to say, the transaction processor 1D is configured to execute the transaction processing in response to the comparing unit 13B determining that the first customer information and the second customer information match, and configured so as not to execute the transaction processing in response to the comparing unit 13B determining that the first customer information and the second customer information do not match.

When the transaction processing is complete, the communication unit 1C transmits completion information indicating that the transaction processing is complete, to the transaction information server 13 (step #10 in FIG. 4). Then, the transaction information server 13 overwrites information after the processing on the transaction information corresponding to the completion information, among pieces of transaction information stored in the database. The consultant, a teller, or the like can execute account processing on the account of the customer based on the information after the processing. For example, when "action #06" shown in FIG. 3 is complete, the consultant, a teller, or the like may perform account processing for withdrawing money.

### Second Example of Configuration of Financial Transaction System

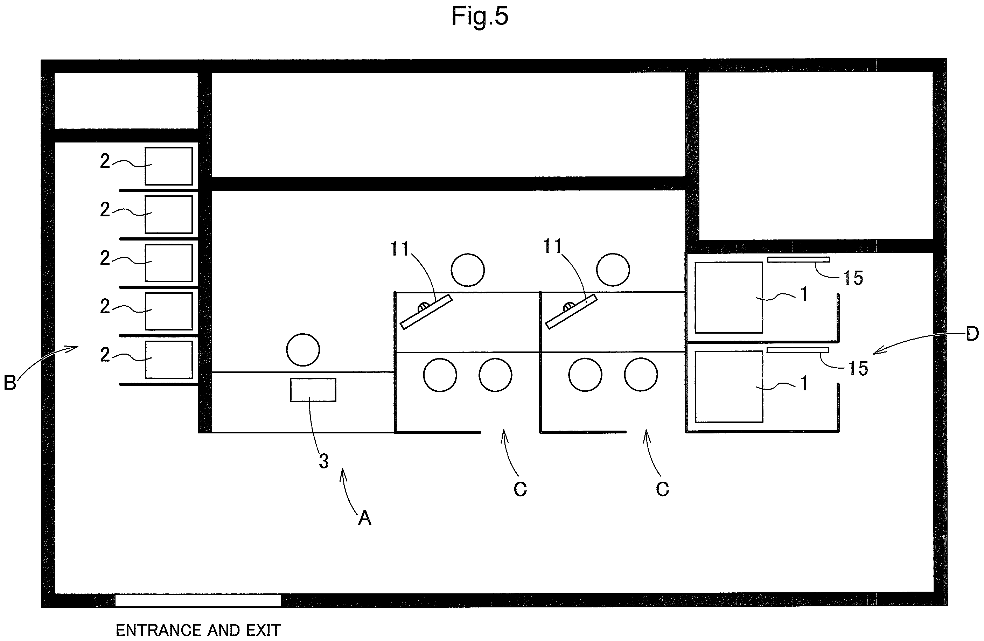

The following describes a second example of the configuration of the financial transaction system with reference to FIGS. 5 to 8. Similarly to FIG. 1, FIG. 5 shows an example of a branch of a financial institution such as a branch or local office of a bank, for example. In the example shown in FIG. 5, the printing device 14 is not provided in the consultation booth C, and an adjacent conversation terminal 15 that is included in a remote conversation system 10 is disposed in the self-depositing and withdrawing booth D. The adjacent conversation terminal 15 is an example of the "customer terminal".

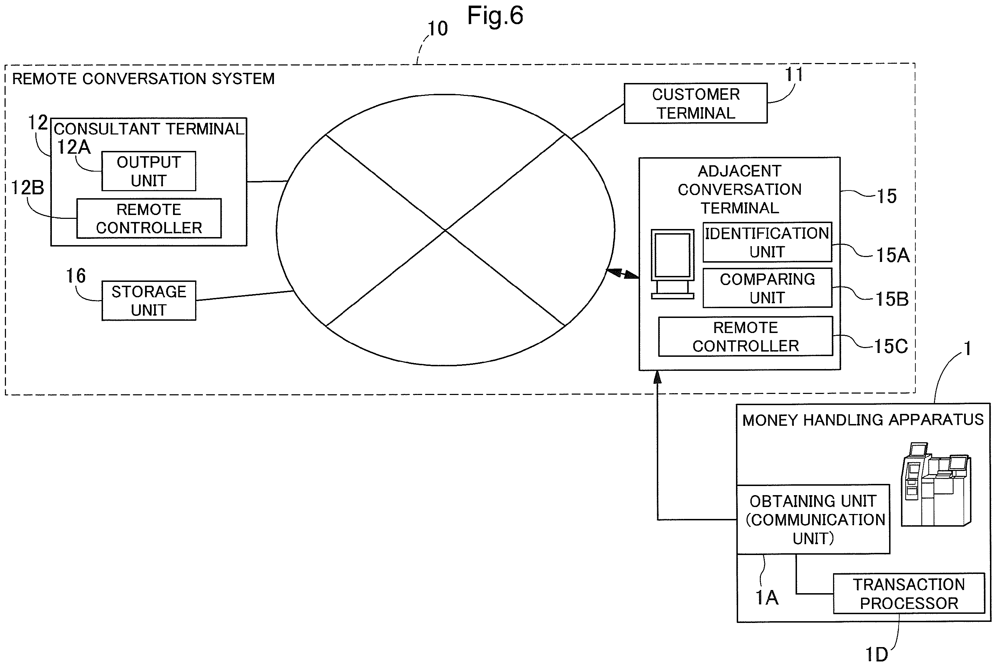

As shown in FIG. 6, the remote conversation system 10 in the second example includes a customer consultation terminal 11, a consultant terminal 12, the adjacent conversation terminal 15, and a storage unit 16. As in the first example described above, the customer consultation terminal 11 is disposed in a consultation booth C, and the consultant terminal 12 is disposed in the head office, a local core base, or a consultation center, for example. The adjacent conversation terminal 15 is disposed next to a money handling apparatus 1. The storage unit 16 is provided in the head office or a data center of the bank, for example, and stores account information, customer information (first customer information), and the like in a database. The storage unit 16 may be a storage medium including at least one of a volatile memory, a non-volatile memory, a hard disk drive, and the like, or may be a server that includes such a storage medium, a processor, and a data communication module. The storage unit 16 may also be included in the customer consultation terminal 11, the consultant terminal 12, or the adjacent conversation terminal 15.

The customer consultation terminal 11, the consultant terminal 12, the adjacent conversation terminal 15, and the storage unit 16 are connected to each other via an intra-bank network, for example, in a manner such that data communication can be performed. Also, the money handling apparatus 1 and the adjacent conversation terminal 15 are connected to each other in a manner such that data communication can be performed without using the intra-bank network.

The remote conversation system 10 in the second example may also include a plurality of consultant terminals 12 as in the first example. Also, a plurality of servers may be provided as backup to the storage unit 16.

As in the first example, a customer and a consultant who is in a main office have a conversation with use of the customer consultation terminal 11 and the consultant terminal 12. The consultant terminal 12 in the second example includes a remote controller 12B, which will be described later.

The adjacent conversation terminal 15 includes a camera, a monitor, a microphone, a speaker, a processor, a data communication module, etc. The consultant is displayed on the monitor of the adjacent conversation terminal 15. Accordingly, the customer can operate the money handling apparatus 1 while making a conversation with the consultant with use of the adjacent conversation terminal 15 in the self-depositing and withdrawing booth D. That is to say, the adjacent conversation terminal 15 can communicate with the money handling apparatus 1 and is used by the customer to have a remote conversation with the consultant.

The adjacent conversation terminal 15 has a function of receiving transaction information from the consultant terminal 12 and transferring the transaction information to the money handling apparatus 1. The money handling apparatus 1 in the second example includes an obtaining unit 1A, but the obtaining unit 1A in the second example is configured to obtain transaction information from the adjacent conversation terminal 15 through data communication, and does not have a scanning function like that of a bar code reader, for example. In other words, the obtaining unit 1A in the second example is also used as a "communication unit". The obtaining unit 1A is configured to obtain transaction information output by an output unit 12A of the consultant terminal 12, from the adjacent conversation terminal 15.

Then, a transaction processor 1D executes money transaction processing (depositing, withdrawal, money change, bank transfer, etc.) based on the transaction information obtained by the obtaining unit 1A.

Note that, if a controller (processor) of the existing money handling apparatus 1 does not support communication with the adjacent conversation terminal 15, firmware and software operating the existing money handling apparatus 1 are updated to support communication with the adjacent conversation terminal 15. In this case, the bank or the like need not replace the existing money handling apparatus 1, and the money handling apparatus 1 can be configured to obtain transaction information from the adjacent conversation terminal 15.

The adjacent conversation terminal 15 includes an identification unit 15A, a comparing unit 15B, and a remote controller 15C, which will be described later. The identification unit 15A is a sensor used for biometric identification such as face identification or fingerprint identification, for example. The identification unit 15A obtains second customer information for identifying the person who is operating the money handling apparatus 1. The identification unit 15A corresponds to the "person identification unit".

The comparing unit 15B reads customer information (first customer information) corresponding to the transaction information from the storage unit 16, and compares the first customer information and second customer information obtained by the identification unit 15A. The result of comparison performed by the comparing unit 15B is displayed on the monitor of the consultant terminal 12.

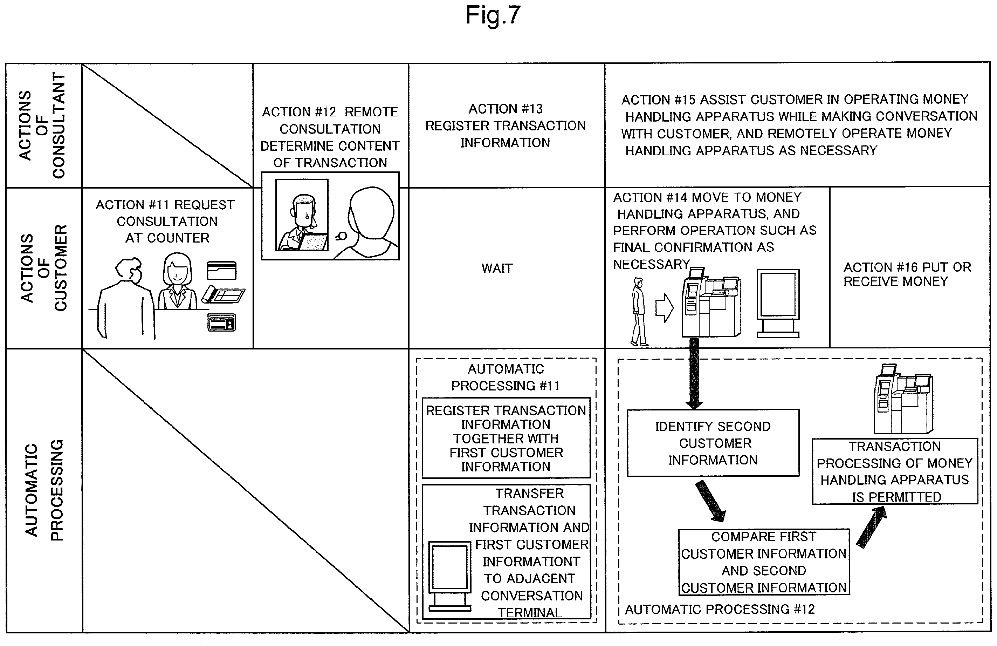

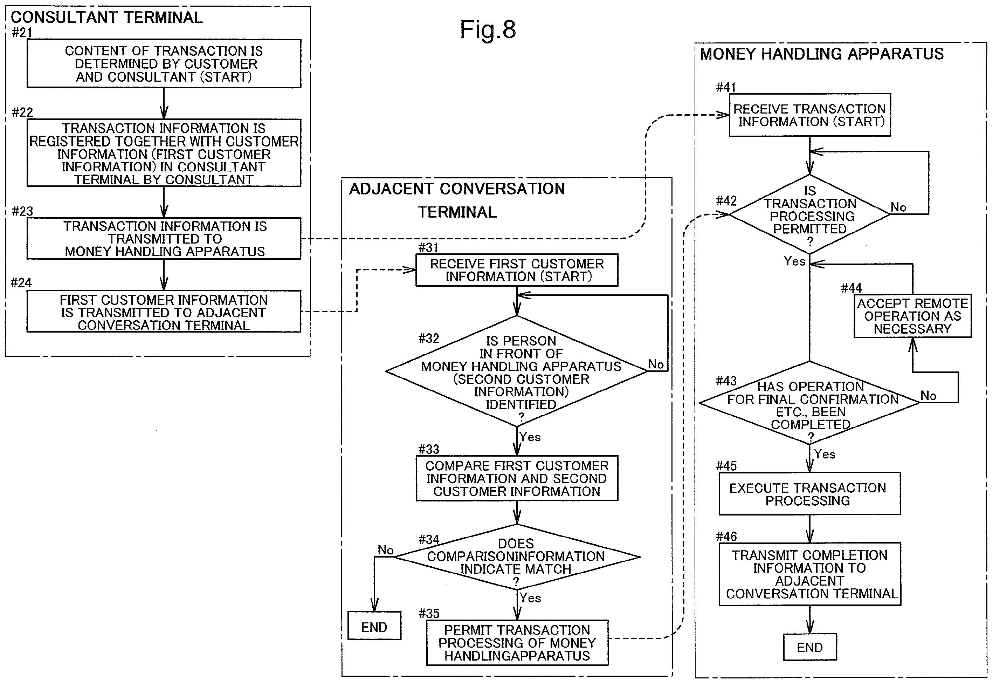

FIG. 7 shows actions of a customer and a consultant who is in a remote place, automatic processing performed by the remote conversation system 10, and automatic processing performed by the money handling apparatus 1 in time series. FIG. 8 is a flowchart showing processing that is performed when the money handling apparatus 1 needs to be operated based on a conversation held between the customer and the remote consultant.

As shown in "action #11" in FIG. 7, the customer first makes a request for a consultation to a clerk or the like at the counter A. Then, the customer is guided to the consultation booth C by a clerk or the like in the branch, to have a remote conversation (remote consultation) with the consultant who is in a remote place (action #12 in FIG. 7). At this time, the customer and the consultant attending to the customer have the remote conversation via the remote conversation system 10. When the content of a transaction is determined based on the remote consultation, the consultant registers transaction information together with customer information (first customer information) in a database (action #13 in FIG. 7). Note that the request for the consultation may be accepted by an automatic reception device, rather than at the manned counter, and the automatic reception device may guide the customer to the consultation booth.

When "action #13" is performed, "automatic processing #11" shown in FIG. 7 is started. The following describes "action #13" and "automatic processing #11" with reference to the flowchart shown in FIG. 8. When the content of the transaction is determined by the customer and the consultant (step #21 in FIG. 8), the consultant registers the transaction information (transaction information corresponding to the determined content of the transaction) together with the customer information (first customer information) in the database (step #22 in FIG. 8). When the consultant inputs the transaction information to the consultant terminal 12 and saves the transaction information, the output unit 12A outputs the transaction information indicative of the content of the money transaction determined based on the remote conversation to the money handling apparatus 1 (step #23 in FIG. 8) and transmits the first customer information for identifying the customer who had the remote conversation to the adjacent conversation terminal 15 (step #24 in FIG. 8) as shown in "automatic processing #11" in FIG. 7.

Here, the money handling apparatus 1 is not directly connected to the intra-bank network, but is connected to the adjacent conversation terminal 15. Therefore, the output unit 12A transmits the transaction information to the adjacent conversation terminal 15 in "step #23". Then, the adjacent conversation terminal 15 transfers the transaction information received from the output unit 12A to the money handling apparatus 1. Accordingly, the output unit 12A outputs the transaction information and the first customer information to the adjacent conversation terminal 15.

The transaction information includes a transaction type (depositing, withdrawal, money change, bank transfer, etc.), a transaction amount, information of a payee, and the like. The first customer information is stored in the storage unit 16. The first customer information includes the name, account information, and the like. The output unit 12A reads the first customer information from the storage unit 16 and outputs the first customer information together with the transaction information to the adjacent conversation terminal 15.

When the customer has received a transaction slip, the customer moves to the self-depositing and withdrawing booth D (action #14 in FIG. 7). When the customer comes to the front of the adjacent conversation terminal 15, the camera included in the adjacent conversation terminal 15 captures an image of the customer, and the captured image of the customer is displayed on the monitor of the consultant terminal 12. At this time, an image of the consultant is displayed on the monitor of the adjacent conversation terminal 15, and the customer and the consultant can have a conversation. Then, automatic processing #12 shown in FIG. 7 is started.

The "automatic processing #12" shown in FIG. 7 is mainly performed by the money handling apparatus 1 and the adjacent conversation terminal 15. When the money handling apparatus 1 has received the transaction information from the output unit 12A via the adjacent conversation terminal 15 (step #41 in FIG. 8), the controller of the money handling apparatus 1 determines whether or not identity confirmation processing has been completed by the adjacent conversation terminal 15 and transaction processing has been permitted (step #42 in FIG. 8). If the identity confirmation processing has not been completed by the adjacent conversation terminal 15, the determination result in "step #42" in FIG. 8 is No, and the determination processing in "step #42" is repeated.

When the adjacent conversation terminal 15 has received the first customer information from the output unit 12A (step #31 in FIG. 8), a controller of the adjacent conversation terminal 15 determines whether or not the identification unit 15A has obtained second customer information for identifying the person in front of the money handling apparatus 1 (the person operating the money handling apparatus 1) (step #32 in FIG. 8). If the identification unit 15A has not obtained the second customer information (step #32 in FIG. 8: No), the processing in "step #32" is repeated until the second customer information is obtained by the identification unit 15A.

When the identification unit 15A has obtained the second customer information (step #32 in FIG. 8: Yes), the comparing unit 15B compares the first customer information and the second customer information (step #33 in FIG. 8). An image of the customer is captured by the camera included in the adjacent conversation terminal 15, and the image of the customer is displayed on the monitor of the consultant terminal 12. Accordingly, the consultant can confirm the identity of the customer in real time on the monitor of the consultant terminal 12, and the identity can also be confirmed through the comparison performed by comparing unit 15B. That is to say, in the configuration of the second example, it is possible to double-check the identity of the customer through the comparison performed by the comparing unit 15B and the face-to-face confirmation performed between the consultant and the customer via the adjacent conversation terminal 15.

In "step #34" shown in FIG. 8, a determination is made based on comparison information output from the comparing unit 15B, i.e., a determination is made on whether or not the first customer information and the second customer information match. This determination may be performed automatically. Alternatively, a configuration is also possible in which the consultant checks the comparison information and performs final check through face-to-face confirmation with use of the adjacent conversation terminal 15, and then enters a determination result indicating Yes or No through an operation screen of the consultant terminal 12.

If the determination result in "step #34" is No, transaction processing is not executed by the money handling apparatus 1. If the determination result in "step #34" is Yes, the controller of the adjacent conversation terminal 15 transmits a permission signal for permitting the transaction processing to the money handling apparatus 1 (step #35 in FIG. 8). That is to say, when the identity confirmation processing is complete, the determination result in "step #34" is Yes, and the transaction processing to be performed by the money handling apparatus 1 is permitted.

Accordingly, the transaction processor 1D is configured to execute the transaction processing in response to the comparing unit 15B determining that the first customer information and the second customer information match, and configured so as not to execute the transaction processing in response to the comparing unit 15B determining that the first customer information and the second customer information do not match.

When the transaction processing to be performed by the money handling apparatus 1 is permitted in "step #35" in FIG. 8, the determination result in "step #42" in FIG. 8 is Yes. Then, the customer performs final confirmation or the like by operating the money handling apparatus 1 (action #14 in FIG. 7). At this time, the controller of the money handling apparatus 1 determines whether or not the operation performed by the customer for final confirmation or the like has been completed (step #43 in FIG. 8). At this time, the consultant assists the customer in operating the money handling apparatus 1 while making a conversation with the customer via the consultant terminal 12 and the adjacent conversation terminal 15 (action #15 in FIG. 7).

At this time, the controller of the money handling apparatus 1 communicates with the remote controller 15C of the adjacent conversation terminal 15. The controller of the money handling apparatus 1 can transmit information regarding an operation screen of the money handling apparatus 1 to the remote controller 15C in response to a request from the remote controller 15C. Upon receiving the information regarding the operation screen of the money handling apparatus 1 from the obtaining unit 1A (communication unit), the remote controller 15C of the adjacent conversation terminal 15 transmits the information regarding the operation screen of the money handling apparatus 1 to the remote controller 12B of the consultant terminal 12. Therefore, when the customer has trouble operating the money handling apparatus 1, the consultant can remotely operate the money handling apparatus 1 via the remote controller 12B. That is to say, the remote conversation system 10 includes the remote controller 15C that can communicate with the money handling apparatus 1 and is used by the consultant to remotely operate the money handling apparatus 1.

If the operation performed by the customer for final confirmation or the like has not been completed (step #43 in FIG. 8: No), the controller of the money handling apparatus 1 accepts the remote operation as necessary while repeating the determination processing in step #43 (step #44 in FIG. 8). With this configuration, the consultant remotely operates the money handling apparatus 1 as necessary in "action #15" shown in FIG. 7 when the consultant cannot sufficiently assist the customer in operating the money handling apparatus 1.

When it is determined that the operation performed by the customer for final confirmation or the like has been completed (step #43 in FIG. 8: Yes), the transaction processor 1D of the money handling apparatus 1 executes transaction processing (depositing processing, withdrawal processing, money change processing, bank transfer processing, etc.) based on the transaction information (step #45 in FIG. 8). At this time, the customer puts money to be deposited or changed into the money handling apparatus 1, or receives withdrawn or changed money from the money handling apparatus 1, as necessary as shown in "action #16" in FIG. 7.

When the transaction processing is complete, the obtaining unit 1A (communication unit) transmits completion information indicating that the transaction processing is complete, to the adjacent conversation terminal 15 (step #46 in FIG. 8). Then, the adjacent conversation terminal 15 transmits the completion information to the consultant terminal 12 and the storage unit 16. The consultant, a teller, or the like can execute account processing on the account of the customer based on the completion information. For example, when "action #16" shown in FIG. 7 is complete, the consultant, a teller, or the like may perform account processing for withdrawing money.

### Functions and Effects of Embodiments

The financial transaction system according to a first aspect of the present disclosure includes the money handling apparatus 1 configured to be operated by a customer and the remote conversation system 10 that enables a remote conversation between the customer and a consultant attending to the customer. Also, the remote conversation system 10 includes the output unit 12A configured to output transaction information indicative of the content of a money transaction determined in the remote conversation. The money handling apparatus 1 includes the obtaining unit 1A configured to obtain the transaction information and the transaction processor 1D configured to execute transaction processing based on the transaction information.

With this configuration, when a money transaction is determined in a remote conversation held between the customer and the consultant via the remote conversation system 10, the money handling apparatus 1 can obtain transaction information indicative of the content of the money transaction. The money handling apparatus 1 executes transaction processing based on the transaction information, and therefore, even if the customer is not accustomed to operating the money handling apparatus 1, the customer only needs to perform a minimum number of simple operations on the money handling apparatus 1. Therefore, the customer can smoothly carry out the transaction with use of the money handling apparatus 1 based on the content determined in the conversation between the customer and the consultant who is in a remote place.

In the financial transaction system according to the first aspect of the present disclosure, the output unit 12A is configured to output graphics indicative of the content of the money transaction as the transaction information, and the obtaining unit 1A is configured to obtain the transaction information by reading the graphics.

In this configuration, the content of the transaction is indicated by the graphics. Accordingly, the transaction processing is executed by the money handling apparatus 1 in response to the customer causing the obtaining unit 1A to obtain the graphics, for example. Therefore, the customer can carry out the transaction more smoothly with use of the money handling apparatus 1.

In the financial transaction system according to the first aspect of the present disclosure, the remote conversation system 10 includes the adjacent conversation terminal 15 (customer terminal) capable of communicating with the money handling apparatus 1 and enabling the customer to have a remote conversation with the consultant. The obtaining unit 1A is configured to obtain the transaction information output by the output unit 12A, from the adjacent conversation terminal 15 (customer terminal).

In this configuration, the transaction information is output to the obtaining unit 1A via the adjacent conversation terminal 15 (customer terminal). Therefore, the customer only needs to perform a minimum number of simple operations on the money handling apparatus 1. The customer can carry out the transaction more smoothly with use of the money handling apparatus 1.

In the financial transaction system according to the first aspect of the present disclosure, the remote conversation system 10 includes the remote controller 12B or 15C capable of communicating with the money handling apparatus 1 and enabling the consultant to remotely operate the money handling apparatus 1.

With this configuration, the consultant can remotely operate the money handling apparatus 1. Therefore, even if the customer does not operate the money handling apparatus 1, the transaction processing is executed by the money handling apparatus 1. Therefore, it is possible to avoid a risk of the customer having trouble operating the money handling apparatus 1 and standing there without knowing what to do.

In the financial transaction system according to the first aspect of the present disclosure, the output unit 12A is configured to output first customer information for identifying the customer who has had the remote conversation together with the transaction information. Also, the financial transaction system includes the identification unit 1B or 15A (person identification unit) configured to obtain second customer information for identifying a person who is operating the money handling apparatus 1 and a comparing unit 13B or 15B configured to compare the first customer information and the second customer information. The transaction processor 1D is configured to execute the transaction processing in response to the comparing unit 13B or 15B determining that the first customer information and the second customer information match, and configured so as not to execute the transaction processing in response to the comparing unit 13B or 15B determining that the first customer information and the second customer information do not match.

In this configuration, the transaction processing is executed only when the first customer information and the second customer information match. Accordingly, it is possible to avoid unexpected execution of transaction processing due to a mistake made by the customer in operating the money handling apparatus. Also, unauthorized use of the money handling apparatus 1 is further suppressed.

### Other Embodiments

The present disclosure is not limited to the configurations described above in the first and second examples. The following describes representative examples of other embodiments of the present disclosure.
(1) There is no limitation to the above embodiments, and a configuration is also possible in which a dedicated application is installed in a portable terminal (e. g., a smartphone or a tablet terminal) of the customer, and the output unit 12A transmits transaction information to the portable terminal held by the customer. In this case, the obtaining unit 1A may be configured to obtain the transaction information from the portable terminal. The obtaining unit 1A may obtain the transaction information from the portable terminal, for example, by scanning graphics (a two-dimensional code, a bar code, a color code, etc.) displayed on a monitor screen of the portable terminal, or the money handling apparatus 1 may perform wireless communication (e.g., 2.4 GHz or 5 GHz near field wireless communication) with the portable terminal of the customer to obtain the transaction information. The portable terminal held by the customer is an example of the "customer terminal".
(2) In the financial transaction system according to the present disclosure, the remote conversation system 10 includes the consultant terminal 12 that is used by the consultant to have a remote conversation with the customer, and the output unit 12A is provided in the consultant terminal 12. There is no limitation to this embodiment, and a configuration is also possible in which the output unit is also provided in the customer consultation terminal 11. That is to say, a configuration is also possible in which the output unit is provided in at least one of the customer consultation terminal 11 and the consultant terminal 12. The output unit may also be provided in the adjacent conversation terminal 15. In short, the output unit only needs to be configured to output transaction information that can be obtained by the obtaining unit 1A of the money handling apparatus 1.
(3) In the financial transaction system described above, a financial transaction method performed by the money handling apparatus 1 that is operated by a customer and the remote conversation system 10 is used. A step of holding a remote conversation between a customer and a consultant attending to the customer via the remote conversation system 10 as shown in "action #02" in FIG. 3 and "action #12" in FIG. 7 corresponds to a "remote conversation step" in the financial transaction method according to a second aspect of the present disclosure. A step of outputting transaction information indicative of the content of a money transaction determined in the remote conversation with use of the output unit 12A as shown in "step #03" in FIG. 4 and "step #23" in FIG. 8 corresponds to an "output step" in the financial transaction method according to the second aspect of the present disclosure. A step of obtaining the transaction information by the money handling apparatus 1 with use of the obtaining unit 1A as shown in "step #04" in FIG. 4 and "step #41" in FIG. 8 corresponds to an "obtaining step" in the financial transaction method according to the second aspect of the present disclosure. A step of executing transaction processing based on the transaction information by the transaction processor 1D as shown in "step #09" in FIG. 4 and "step #45" in FIG. 8 corresponds to a "transaction processing step" in the financial transaction method according to the second aspect of the present disclosure.
(4) The money handling apparatus 1 may have an automated account processing function.
(5) The customer consultation terminal 11 may also be a tablet terminal that can be carried by the customer in the branch. In this case, the customer consultation terminal 11 may also have the functions of the adjacent conversation terminal 15. In this configuration, the printing device 14 need not be provided in the consultation booth C, and the adjacent conversation terminal 15 need not be provided in the self-depositing and withdrawing booth D.
(6) In the first example described above, a configuration is also possible in which the transaction information server 13 is not provided. In this case, the storage unit 13A may also be provided in the customer consultation terminal 11 or the consultant terminal 12. The comparing unit 13B may also be provided in the customer consultation terminal 11, the consultant terminal 12, or the money handling apparatus 1.
(7) In the first example described above, the money handling apparatus 1 obtains information of graphics on a transaction slip printed by the printing device 14 with use of the obtaining unit 1A. In the first example, the adjacent conversation terminal 15 is not provided in the self-depositing and withdrawing booth D, but the adjacent conversation terminal 15 may also be provided in the self-depositing and withdrawing booth D in the first example as well. With this configuration, when the customer has trouble operating the money handling apparatus 1, the consultant can assist the customer in operating the money handling apparatus 1 via the adjacent conversation terminal 15. In the first example, it is also possible to adopt a configuration in which the consultant can remotely operate the money handling apparatus 1 with use of the remote controller 12B as in the second example.

The configurations disclosed in the above embodiments (including the other embodiments, the same applies hereinafter) may be implemented by being combined with configurations disclosed in other embodiments as long as no contradiction arises. The embodiments disclosed in the present specification are examples, and embodiments of the present disclosure are not limited to the above embodiments. The disclosed embodiments can be modified as appropriate within a scope not departing from the object of the present disclosure.

The present disclosure can be applied to a financial transaction system, a money handling apparatus, and a financial transaction method.

## Claims

1. A financial transaction system comprising:
a money handling apparatus (1) configured to be operated by a customer;
a remote conversation system (10) enabling a remote conversation between the customer and a consultant attending to the customer;
an output unit (12A) included in the remote conversation system (10) and configured to output transaction information indicative of content of a money transaction determined in the remote conversation;
an obtaining unit (1A) included in the money handling apparatus (1) and configured to obtain the transaction information; and
a transaction processor (1D) included in the money handling apparatus (1) and configured to execute transaction processing based on the transaction information.

2. The financial transaction system according to claim 1, wherein:
the output unit (12A) is configured to output graphics indicative of the content of the money transaction as the transaction information; and
the obtaining unit (1A) is configured to obtain the transaction information by reading the graphics.

3. The financial transaction system according to claim 1 or 2, wherein:
the output unit (12A) is configured to transmit the transaction information to a portable terminal held by the customer; and
the obtaining unit (1A) is configured to obtain the transaction information from the portable terminal.

4. The financial transaction system according to any one of claims 1 to 3, further comprising
a customer terminal (11, 15) included in the remote conversation system (10), the customer terminal (11, 15) being capable of communicating with the money handling apparatus (1) and enabling the customer to have the remote conversation with the consultant,
wherein the obtaining unit (1A) is configured to obtain the transaction information output by the output unit (12A) from the customer terminal (11, 15).

5. The financial transaction system according to claim 4, further comprising
a consultant terminal (12) included in the remote conversation system (10) and enabling the consultant to have the remote conversation with the customer,
wherein the output unit (12A) is provided in at least one of the customer terminal (11, 15) and the consultant terminal (12).

6. The financial transaction system according to any one of claims 1 to 5, further comprising
a remote controller (12B, 15C) included in the remote conversation system (10), the remote controller being capable of communicating with the money handling apparatus (1) and enabling the consultant to remotely operate the money handling apparatus (1).

7. The financial transaction system according to any one of claims 1 to 6,
wherein the output unit (12A) is configured to output first customer information for identifying the customer who has had the remote conversation together with the transaction information,
the financial transaction system further comprising:
a person identification unit (1B, 15A) configured to obtain second customer information for identifying a person who is operating the money handling apparatus (1); and
a comparing unit (13B, 15B) configured to compare the first customer information and the second customer information,
wherein the transaction processor (1D) is configured to execute the transaction processing in response to the comparing unit (13B, 15B) determining that the first customer information and the second customer information match, and configured so as not to execute the transaction processing in response to the comparing unit (13B, 15B) determining that the first customer information and the second customer information do not match.

8. A financial transaction method to be performed by a money handling apparatus (1) that is operated by a customer and a remote conversation system (10), the financial transaction method comprising:
a remote conversation step of holding a remote conversation between the customer and a consultant attending to the customer via the remote conversation system (10);
an output step of outputting transaction information indicative of content of a money transaction determined in the remote conversation with use of the remote conversation system (10);
an obtaining step of obtaining the transaction information by the money handling apparatus (1); and
a transaction processing step of executing transaction processing by the money handling apparatus (1) based on the transaction information.
